(19) **Europäisches Patentamt**

**European Patent Office**

**Office européen des brevets**

(11) Veröffentlichungsnummer: **0 630 911 A1**

# (12) EUROPÄISCHE PATENTANMELDUNG

(21) Anmeldenummer: **94108790.0**

(22) Anmeldetag: **08.06.94**

(51) Int. Cl.⁵: **C08F 8/00**, C08F 8/32, C08F 8/44, D21H 21/10

(30) Priorität: **21.06.93 DE 4320433**

(43) Veröffentlichungstag der Anmeldung:
**28.12.94 Patentblatt 94/52**

(84) Benannte Vertragsstaaten:
**AT BE CH DE ES FR GB IT LI NL SE**

(71) Anmelder: **WOLFF WALSRODE AKTIENGESELLSCHAFT**

**D-29699 Walsrode (DE)**

(72) Erfinder: **Szablikowski, Klaus, Dr.**
**Claudiusstrasse 5**
**D-29664 Walsrode (DE)**
Erfinder: **Koch, Wolfgang, Dr.**
**An der Warnau 40**
**D-29699 Bomlitz (DE)**
Erfinder: **Leffers, Heinrich, Dr.**
**Sieverdingen 10**
**D-29664 Walsrode (DE)**
Erfinder: **Poersch-Panke, Hans-Günter, Dr.**
**Waetgenstrasse 9**
**D-29664 Walsrode (DE)**
Erfinder: **Böhmer, Branislav, Dr.**
**Schneeheide 79**
**D-29664 Walsrode (DE)**

(74) Vertreter: **Braun, Rolf, Dr. et al**
**Bayer AG**
**Konzernverwaltung RP**
**Patentabteilung**
**D-51368 Leverkusen (DE)**

(54) **Verfahren zur Herstellung von kationischen, wasserlöslichen Polymeren sowie deren Verwendung.**

㊾ Verfahren zur Herstellung von wasserlöslichen, aminischen, kationischen Polymeren durch kontinuierliche oder diskontinuierliche Umsetzung eines Polymers mit primären, sekundären oder tertiären Aminfunktionen in der Seitenkette oder der Hauptkette als Ausgangsprodukte, wobei die Umsetzung in wäßriger Lösung ohne zusätzliche Lösungsmittel bei einer Temperatur von 30 bis 90 °C bei einem pH-Wert von 8 bis 14 mit einem Epoxid, einem Glycidylether oder einer Mischung aus verschiedenen Epoxiden und Glycidylethern innerhalb von 3 bis 30 Minuten durchgeführt wird, Epoxide bzw. Glycidylether auf einmal oder portionsweise zugegeben werden, und daß nach Einstellung des pH-Wertes der wäßrigen Lösung des kationischen Polymers, der nach der Umsetzung mit Epoxid bzw. Glycidylether >13,5 ist, mit einer Mineralsäure oder Carbonsäure ohne weitere Aufarbeitungsschritte die Produktlösung erhalten wird.

Die Erfindung betrifft ein Verfahren zur absatzweisen und kontinuierlichen Herstellung von wasserlöslichen, kationischen Polymeren und deren Verwendung als kationische Dispergiermittel für Pigmente und Füllstoffe, die vorzugsweise in der Papierindustrie Verwendung finden und als Retentions- und Entwässerungsmittel.

Kationische, wasserlösliche Polymere sind vielfältig einsetzbar. Genannt seien die Verwendung in Kosmetika, als Retentions- und Entwässerungsmittel und als Störstoffänger bei der Papierherstellung. In zunehmendem Maße werden kationische, wasserlösliche Polymere auch als Dispergiermittel für Füllstoffe, wie z.B. Kaolin und Calciumcarbonat in der Papierindustrie eingesetzt. Die Vorteile der kationisch dispergierten Füllstoffsysteme im Vergleich zu anionischen dispergierten sind z.B. geringerer Einsatz von Retentions- und Entwässerungshilfsmitteln, geringerer Einsatz von Störstoffängern und Fixiermitteln, bessere Bedruckbarkeitseigenschaften und höhere Festigkeit des Papiers (Wochenblatt für Papierfabrikation 1984, S. 799, und 1988, S. 176). Der einzige Nachteil ist zur Zeit der hohe Preis für solche Produkte.

Prinzipiell lassen sich kationische, wasserlösliche Polymers auf zwei Wegen herstellen. Der erste Weg ist die Polymerisation von kationischen Monomeren nach den üblichen Methoden. Die zweite Möglichkeit ist die Umsetzung von nichtkationischen Polymeren. Die nichtkationischen Polymeren tragen zumeist primäre, sekundäre oder tertiäre Stickstoffgruppen, die durch Umsetzung mit einem Alkylierungsmittel zu quaternären, und somit kationischen Aminfunktionen umgesetzt werden. Hierzu sind mehrere Methoden beschrieben.

Nach Research Disclosure 19 211, April 1980, erhält man durch Umsetzung von N-Aminomethylacrylamid oder den hieraus als Wasser-in-Öl-Emulsion hergestellten Polymeren, wobei sich das Monomere bzw. Polymere in der wäßrigen, dispersen Phase befindet, mit Ethylenoxid bei 15 bis 20°C, wobei Ethylenoxid innerhalb von 2 Stunden als Gas zugegeben wird, der pH-Wert während der Reaktion durch Säurezugabe konstant gehalten wird und der Ansatz über Nacht gerührt werden muß, kationische Polymere. Nachteilig an diesem Verfahren ist die lange Reaktionszeit und das Vorhandensein von aliphatischen Kohlenwasserstoffen als kontinuierliche Phase und von Emulgatoren, welche beide ökologisch nicht zu vertreten sind und abgetrennt werden müssen, wenn die Polymeren die genannten Anwendungen finden sollen. Die genannten Produkte sind außerdem nicht chlor- bzw. chloridfrei, was aus Sicht der Ökologie vermieden werden sollte.

Nach DE 34 32 569 und DE 29 48 795 erhält man kationische, wasserlösliche Polymere, indem man Umsetzungsprodukte von Acrylnitril-Homo- und -Copolymerisaten mit Polyaminen mit Alkylhalogeniden umsetzt. Nachteilig ist die Einführung von Halogen und die Rückstände von Alkylierungsmitteln im Produkt und die relativ langsame Reaktionszeit beim Einsatz der gängigen und preiswerten Alkylchloride als Alkylierungsmittel. Die Wahl des Anions ist bei dieser Methode außerdem eingeschränkt.

Aufgabe der Erfindung ist es, wasserlösliche, kationische Polymere mit beliebigen Anionen außer den Halogenen aus wasserlöslichen Polymeren mit primären, sekundären oder tertiären Amingruppen in der Seitenkette oder der Hauptkette zur Verfügung zu stellen, wobei das Herstellungsverfahren unter ökologischen Aspekten von Vorteil ist, d.h., keine Kohlenwasserstoffe und Emulgatoren eingesetzt werden und somit keine flüssigen oder festen Abfälle entstehen, sowie unter ökonomischen Aspekten, d.h. kurze Reaktionszeiten, hohe Raum-Zeit-Ausbeuten und keine Aufarbeitungsstufen. Das Verfahren kann sowohl kontinuierlich als auch diskontinuierlich durchgeführt werden.

Die Aufgabe wird erfindungsgemäß gelöst durch - Umsetzung einer wäßrigen Polymerlösung, wobei das Polymer primäre, sekundäre oder tertiäre Amingruppen in der Seitenkette oder der Hauptkette enthält und auch als vernetztes Polymeres vorliegen kann.

Bei einer Temperatur von 30 bis 90°C und einem pH-Wert von 8 bis 14 wird die wäßrige Lösung eines Polymeren, das primäre, sekundäre oder tertiäre Amingruppen in der Seitenkette oder der Hauptkette trägt, mit einem Epoxid, einem Glycidylether oder einer Mischung aus verschiedenen Epoxiden bzw. Glycidylethern innerhalb von 3 bis 30 Minuten umgesetzt. Die Umsetzung wird entweder als Batchansatz durchgeführt, wobei die gesamte Menge an Epoxid auf einmal oder in mehreren Teilen zugegeben wird oder aber als kontinuierliches Verfahren, wobei ein Reaktor ohne Rückvermischung verwendet wird. Nach 3 bis 30 Minuten wird der pH-Wert mit einer Mineral- oder Carbonsäure auf den gewünschten Wert eingestellt, wobei keine halogenhaltige Säure verwendet wird.

Es wurde überraschenderweise gefunden, daß das Epoxid oder der Glycidylether bei den Temperaturen und den pH-Werten in der wäßrigen Lösung praktisch nicht hydrolysiert und mehr als 99 % des eingesetzten Epoxides, des Glycidylethers oder der Mischung verschiedener Epoxide bzw. Glycidylether mit dem Polymeren reagiert hat.

Der erste Bestandteil zur Herstellung der quaternären, kationischen, wasserlöslichen Polymeren sind Polymere in Form einer 5 bis 60 gew.-%igen, wäßrigen Lösung, welche primäre, sekundäre oder tertiäre Aminfunktionen in der Seitenkette oder der Hauptkette enthalten, wie z.B. Umsetzungsprodukte von PAN-Homo- und -Copolymerisaten, wobei das Comonomere, z.B. Acrylamid, Acrylsäure sowie deren Ester, wie z.B. Acrylsäuremethylester, Acrylsäureethylester, Acrylsäurebutylester und deren Hydroxalkylester, wie z.B. 2-Hydroxyethylacrylat, 2-Hydroxypropylacrylat, Maleinsäure, Fumarsäure, Methacrylamid, Methacrylsäure sowie deren Ester, so z.B. Methacrylsäuremethylester, Methacrylsäureethylester, Methacrylsäurebutylester und auch deren Hydroryalkylester, wie z.B. 2-Hydroxyethylmethacrylat, 2-Hydroxypropylmethacrylat, Dimethylaminoethylacrylat, Dimethylaminoethylmethacrylat, Diethylaminoethylacrylat, Diethylaminoethylmethacrylat, Vinylacetat, N-Vinylpyrrolidon, N-Vinylimidazol, Vinylpropionat, Vinylbutyrat eingesetzt wird mit Polyaminen, wobei unterschiedlich reaktive Aminfunktionen vorhanden sein müssen, z.B. 3-Aminopropylmorpholin, N-(3-Aminopropyl-)diethanolamin, N,N-Dimethyl-1,3-propandiamin, N-Methyl-1,3-propandiamin, N-Methyl-ethylendiamin, N,N-Dimethylethylendiamin oder Polymere, die durch Polymerisation von ethylenisch ungesättigten Monomeren auf den üblichen Wegen durch Homo- oder Copolymerisation mit Monomeren, wie z.B. Acrylamid, Acrylsäure sowie deren Ester, wie z.B. Acrylsäuremethylester, Acrylsäureethylester, Acrylsäurebutylester und deren Hydroxyalkylester, wie z.B. 2-Hydroxyethylacrylat, 2-Hydrorypropylacrylat, Maleinsäure, Fumarsäure, Methacrylamid, Methacrylsäure sowie deren Ester, so z.B. Methacrylsäuremethylester, Methacrylsäureethylester, Methacrylsäurebutylester und auch deren Hydroxyalkylester, wie z.B. 2-Hydroryethylmethacrylat, 2-Hydroxypropylmethacrylat, Dimethylaminoethylacrylat, Dimethylaminoethylmethacrylat, Diethylaminoethylacrylat, Diethylaminoethylmethacrylat, Vinylacetat, N-Vinylpyrrolidon, N-Vinylimidazol, Vinylpropionat, Vinylbutyrat zu erhalten sind. Die Polymeren, die primäre, sekundäre oder tertiäre Aminfünktion tragen, zeigen üblicherweise in wäßriger Lösung einen pH-Wert, der im basischen Bereich liegt.

Die zweite Komponente zur Herstellung der quaternierten, kationischen, wasserlöslichen Polymeren sind 0,1 bis 10 Mol-Äquivalente, bezogen auf die Aminfunktionen, eines Epoxides oder Epoxidgemisches oder ein Glycidylether, eines Glycidylethergemisches oder eines Epoxid/Glycidylethergemisches. Bevorzugt werden $C_2$- bis $C_4$-Epoxide und, wenn die Verbindung hydrophobe Gruppen tragen soll, $C_{14}$- bis $C_{18}$-Epoxide, die meist in Verbindung mit $C_2$- bis $C_4$-Epoxiden eingesetzt werden. In einer bevorzugten Ausführungsform werden bei Umsetzung mit $C_{14}$- bis $C_{18}$-Epoxiden die $C_{14}$- bis $C_{18}$-Epoxide zuerst zugegeben und anschließend die $C_2$- bis $C_4$-Epoxide.

Die dritte Komponente ist eine Mineralsäure oder eine Carbonsäure, wobei zur Herstellung von halogen- bzw. halogenidfreien Produkten keine halogenhaltige Säure verwendet werden darf. Als Säuren werden z.B. verwendet: Schwefelsäure, schwefelige Säure, Phosphorsäure, Phosphonsäure, phosphorige Säure, Ameisensäure, Essigsäure, Oxalsäure, Weinsäure und Zitronensäure. Die Menge richtet sich nach dem gewünschten pH-Wert der Produktlösung. Bevorzugt wird ein pH-Bereich der wäßrigen Produktlösung von 5 bis 8.

Der pH-Wert der wäßrigen Polymerlösung steigt meist nach Zugabe des Epoxides, des Epoxidgemisches, des Glycidylethers, des Glycidylethergemisches oder Epoxid/Glycidylethergemisches auf Werte um 12 bis 14, wobei überraschenderweise praktisch keine Hydrolyse des Epoxides bzw. Glycidylethers zu den entsprechenden Alkoholen eintritt. Gemäß der allgemeinen Reaktionsweise wird das Polymere, welches primäre, sekundäre oder tertiäre Gruppen in der Seitenkette oder der Hauptkette trägt, in Form einer wäßrigen 5 bis 60 gew.-%igen Lösung auf 30 bis 90°C aufgeheizt und 0,1 bis 10 Mol-Äquivalente, bezogen auf primäre, sekundäre und tertiäre Aminfunktion, an Epoxid, Glycidylether, oder den Gemischen als Flüssigkeit zugegeben. Bei der Zugabe von niedermolekularen Epoxiden, wie z.B. Ethylenoxid und Propylenoxid, muß dieses unter einem Druck von 2 bis 5 bar geschehen, um diese Epoxide zu verflüssigen, da sie bei Normaldruck gasförmig sind. Die Reaktion ist durch einen Anstieg der Temperatur erkennbar und nach 3 bis 30 Minuten beendet. Der pH-Wert der wäßrigen Lösung des kationischen Polymers wird mit einer der obengenannten Säure auf den gewünschten pH-Wert eingestellt, bevorzugt auf einen pH-Wert zwischen 5 und 8.

Eine bevorzugte Ausführungsform ist die Umsetzung eines vernetzten Produktes eines Acrylnitril-Homo- bzw. -Copolymeren mit einem N,N-Dialkylaminoalkylamin mit

a) 0,1 bis 0,5 Mol.-Äquivalenten, bezogen auf primäre, sekundäre, tertiäre Aminfunktion im Polymeren eines $C_{14}$- bis $C_{18}$-Epoxides bei 60 bis 80°C und anschließende Umsetzung mit

b) 0,5 bis 2 Mol.-Äquivalente, bezogen auf primäre, sekundäre, tertiäre Aminfunktion des Polymeren eines $C_2$- bis $C_4$-Epoxides bei 30 bis 80°C, wobei Ethylenoxid besonders bevorzugt wird, und anschließende Einstellung des pH-Wertes mit einer Carbon- oder Mineralsäure, wie sie oben genannt wurden, auf pH 5 bis 8.

Eine weitere bevorzugte Ausführungsform ist die Umsetzung von Umsetzungsprodukten eines Polyacrylnitril-Homo- bzw. Copolymeres mit einem N,N-Dialkylaminoalkylamin mit Ethylenoxid und/oder Propylenoxid bei 30 bis 60°C, wobei der pH-Wert der wäßrigen Eduktlösung zwischen 8 und 10 liegt, das Ethylenoxid/Propylenoxid unter einem Druck von 2 bis 5 bar zugegeben wird und nach 5 bis 10 Minuten der pH-Wert der Reaktionslösung mit einer der obengenannten Säuren eingestellt wird.

In jedem Fall erhält man eine wäßrige Lösung des kationischen Polymeren, die direkt ohne weitere Reinigungsschritte oder nach einer weiteren Vernetzung nach den üblichen Verfahren mit einer bifunktionellen Verbindung, wie z.B. Epihalohidrinen, z.B. als Dispergiermittel für Pigmente und Füllstoffe, als Störstofffänger bei der Papierherstellung, als Retentions- und Entwässerungsmittel, als Verdicker oder als Flockungsmittel eingesetzt werden können.

Die Reaktion wird vorteilhalt entweder in einem Batchreaktor oder einem kontinuierlich betriebenen Reaktor mit geringer bzw. ohne Rückvermischung durchgeführt.

Im Falle des Batchreaktors wird die wäßrige Polymerlösung vorgelegt und das Epoxid bzw. der Glycidylether oder die Mischungen auf einmal oder in mehreren Portionen zugegeben. Bei der Verwendung mehrerer Epoxide bzw. Glycidylether ist es vorteilhaft, um bestimmte Eigenschaften der Produkte einzustellen, die unterschiedlichen Epoxide bzw. Glycidylether nacheinander zuzugeben und jeweils mit der Zugabe der weiteren Edukte zu warten, bis die Reaktion zu Ende ist. So ist es z.B. vorteilhaft, um gezielt Produkte mit einer gewünschten Hydrophylie herzustellen, zuerst ein langkettiges Epoxid zuzugeben, so z.B. ein $C_{14}$- bis $C_{18}$-Epoxid und anschließend ein kurzkettiges, wie z.B. Ethylenoxid und/oder Propylenoxid, da diese reaktiver sind und so bei gleichzeitiger Zugabe die Aminfunktion mit Ethylenoxid bzw. Propylenoxid reagieren würden und nicht mit den $C_{14}$- bis $C_{18}$-Epoxiden. Die pH-Einstellung erfolgt in dem gleichen Reaktionsgefäß nach beendigter Reaktion.

Soll die Umsetzung kontinuierlich durchgeführt werden, so ist ein Reaktor mit geringer bzw. ohne Rückvermischung zu wählen. Dies sind z.B. horizontal oder vertikal angeordnete Strömungsrohre mit Einbauten, wie z.B. statischen Mischern, Füllkörpern oder Packung oder aber Kolonnen, wie Siebbodenkolonnen, Füllkörperkolonnen und ähnliche. Die 5 bis 60 gew.-%ige wäßrige Polymerlösung wird mittels einer geeigneten Pumpe kontinuierlich in den Reaktor gefördert. Kurz hinter der Eintrittsstelle der Polymerlösung befindet sich eine Düse oder ein Gasverteiler, durch den das Epoxid oder der Glycidylether in die wäßrige Polymerlösung eingetragen wird. Um eine gute Vermischung der Edukte zu erreichen, kann es sinnvoll sein, z.B. einen statischen Mischer kurz hinter der Eintrittsstelle des Epoxides bzw. Glycidylethers zu installieren. Sollen mehrere verschiedene Epoxide bzw. Glycidylether zugegeben werden, so ist es zweckmäßig, die einzelnen Epoxide bzw. Glycidylether an verschiedenen Stellen zu dosieren. Der pH-Wert der kontinuierlich anfallenden Produktlösung wird ebenfalls kontinuierlich eingestellt, z.B. durch eine pH-geregelte Dosierung einer der obengenannten Säuren. Hierzu ist hinter der Säuredosierung im Reaktionsrohr ein statischer Mischer vorgesehen, um eine gute Durchmischung zu gewährleisten und nach dem Mischer eine pH-Elektrode, über deren Meßwert die Dosierung der Säure geregelt wird.

Die Erfindung soll anhand der folgenden Beispiele näher erläutert werden.

### Beispiel 1

363 g eines Poly-N,N-Dimethylaminopropylacrylamids mit einer Molmasse von 12 400 ($\overline{M}_w$) wurden in 303 g Wasser gelöst und mit 191,5 g Glycidol 30 Minuten bei 70°C umgesetzt. Nach 30 Minuten war kein Glycidol mehr nachweisbar (GC). Der pH-Wert der Lösung wurde mit $H_2SO_4$ auf pH 6 eingestellt. Es wurden 972 g einer 67,5 %igen, wäßrigen Lösung des Poly-N,N-Dimethyl-N-(2,3-dihydroxypropyl)-N-acrylamidopropylanunoniumsulfates erhalten. Die Struktur wurde durch $^{13}$C-NMR bestätigt.

### Beispiel 2

1 500 g einer 34,7 gew.-%igen, wäßrigen Lösung eines Poly-N,N-Methylaminopropylacrylamides wurden in einem 5-l-Stahlautoklaven auf 40°C temperiert und anschließend 165 g Ethylenoxid unter einem Druck von 4 bar zugegeben. Die Temperatur stieg innerhalb von 2 Minuten auf 60°C an und ging anschließend wieder langsam zurück. 10 Minuten nach der Ethylenoxidzugabe wurde der pH-Wert mit $H_2SO_4$ auf 5,0 eingestellt. Es würden 1 830 g einer 34 %igen Lösung des Poly-N,N-Dimethyl-N-2-hydroxyethyl-N-acrylamidopropylammoniumsulfates erhalten. Die Struktur wurde durch $^{13}$C-NMR bestätigt. Es war kein Ethylenoxid mehr nachweisbar, der Gehalt an Ethylenglykol und höheren Homologen war <0,5 % (GC).

### Beispiel 3

1 500 g einer 34,7 gew.-%igen, wäßrigen Lösung eines Poly-N,N-Dimethylaminopropylacrylamides wurden in einem 5-l-Stahlautoklavaen mit 80 g Hexadecyl-1,2-oxiran auf 80°C erhitzt und 30 Minuten bei dieser Temperatur umgesetzt. Anschließend wurde auf 40°C abgekühlt und zu dieser Reaktionsmischung 132 g Ethylenoxid unter einem Druck von 4 bar zugegeben und nach 10 Minuten der pH der Lösung mit Ameisensäure auf 6 eingestellt. Es wurden 2 120 g einer 41,6 %igen Lösung des Poly-N,N-Dimethyl-N-2-hydroxyhexadecyl N-acrylamidopropylammoniumformiat-Co-N,N-Dimethyl-N-2-hydroxyethyl-N-acrylamidopropyl-ammonium-formiates erhalten. Die Struktur wurde durch $^{13}$C-NMR bestätigt.

Vergleichsbeispiel 1

312 g getrocknetes Poly-N,N-Dimethylaminopropylacrylamid mit einer Molmasse von 5 300 ($\overline{M}_w$) und 965 g über Magnesiummethylat getrocknetem Iso-Propanol wurden mit 137 g Methylchlorid im Autoklaven 7 Stunden bei 100 °C umgesetzt. Nach 7 Stunden waren noch 4,5 % des eingesetzten Methylchlorids nicht umgesetzt. Das Polymere wurde, um es von Resten Alkylierungsmittel zu trennten, in Aceton ausgefällt. Es wurden 406 g festes Polymeres erhalten (entspricht 80 % Umsatz).

Vergleichsbeispiel 2

5 070 g einer 55 gew.-%igen Lösung eines Poly-N,N-Dimethylaminopropylacrylamides mit einer Molmasse von 12 400 ($\overline{M}_w$) in Iso-Propanol, 1 350 ml Chlorethanol und 2 422 ml Iso-Propanol wurden bei 70 °C 7 Stunden lang umgesetzt. Nach 7 Stunden waren noch 10 % der ursprünglichen Mengen Chlorethanol nicht umgesetzt.

Vergleichsbeispiel 3

180 g getrocknetes Poly-N,N-Dimethylaminopropylacrylamid mit einer Molmase von 12 400 ($\overline{M}_w$) wurden mit 420 ml Wasser und 95 g Chlorethanol versetzt und bei 70 °C 7 Stunden lang umgesetzt. Nach 7 Stunden waren noch 15 % der ursprünglichen Menge an Chlorethanol nicht umgesetzt.

**Patentansprüche**

1. Verfahren zur Herstellung von wasserlöslichen, aminischen, kationischen Polymeren durch kontinuierliche oder diskontinuierliche Umsetzung eines Polymers mit primären, sekundären oder tertiären Aminfunktionen in der Seitenkette oder der Hauptkette als Ausgangsprodukte, dadurch gekennzeichnet, daß die Umsetzung in wäßriger Lösung ohne zusätzliche Lösungsmittel bei einer Temperatur von 30 bis 90 °C bei einem pH-Wert von 8 bis 14 mit einem Epoxid, einem Glycidylether oder einer Mischung aus verschiedenen Epoxiden und Glycidylethern innerhalb von 3 bis 30 Minuten durchgeführt wird, Epoxide bzw. Glycidylether auf einmal oder portionsweise zugegeben werden, und daß nach Einstellung des pH-Wertes der wäßrigen Lösung des kationischen Polymers, der nach der Umsetzung mit Epoxid bzw. Glycidylether >13,5 ist, mit einer Mineralsäure oder Carbonsäure ohne weitere Aufarbeitungsschritte die Produktlösung erhalten wird.

2. Verfahren nach Anspruch 1, dadurch gekennzeichnet, daß zur kontinuierlichen Herstellung des wasserlöslichen, kationischen Polymeren ein Reaktor ohne bzw. mit geringer Rückvermischung verwendet wird.

3. Verfahren nach Ansprüchen 1 und 2, dadurch gekennzeichnet, daß als Epoxid Ethylenoxid oder Propylenoxid eingesetzt wird.

4. Verfahren nach Ansprüchen 1 bis 3, dadurch gekennzeichnet, daß als nichtkationisches Polymer ein Umsetzungsprodukt aus Polyacrylritril Homo- bzw. Copolymeren mit einem N,N-Dialkyl-alkandiamin verwendet wird.

5. Verfahren nach Ansprüchen 1 bis 4, dadurch gekennzeichnet, daß mit 0,1 bis 10 Mol, bezogen auf Aminfunktion, im Polymer Epoxid bzw. Glycidylether umgesetzt wird.

6. Verfahren nach Ansprüchen 1 bis 4, dadurch gekennzeichnet, daß mit 0,5 bis 2 Mol, bezogen auf Aminfunktionen, im Polymer Epoxid bzw. Glycidylether umgesetzt wird.

7. Verfahren nach Ansprüchen 1 bis 6, dadurch gekennzeichnet, daß die Umsetzung bei 30 bis 60 °C stattfindet.

8. Verwendung der nach den Ansprüchen 1 bis 7 hergestellten Produkte als Dispergiermittel für Füllstoffe.

9. Verwendung der nach den Ansprüchen 1 bis 7 hergestellten Produkte als Retentions- und Entwässerungsmittel und als Fixiermittel für Störstoffe bei der Papierherstellung.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | AU-D-5 759 769 (IMPERIAL CHEMICAL INDUSTRIES LIMITED) <br> * das ganze Dokument * <br> --- | 1-3,5-9 | C08F8/00 <br> C08F8/32 <br> C08F8/44 <br> D21H21/10 |
| A | DE-A-19 48 755 (CIBA AG) <br> * Ansprüche * <br> --- | 1-9 | |
| A | DE-A-15 95 333 (BADISCHE ANILIN- & SODA-FABRIK AG) <br> * das ganze Dokument * <br> --- | 1-9 | |
| A | EP-A-0 238 729 (NALCO CHEMICAL COMPANY) <br> * das ganze Dokument * <br> --- | 1,2 | |
| D,A | RESEARCH DISCLOSURE <br> Bd. 192, Nr. 1 , April 1980 , HAMPSHIRE (UK) <br> Seite 140 <br> 'Alkene oxide quarternaries of mannich derivatives of polyacrylamide' <br> ----- | 1-9 | |

**RECHERCHIERTE SACHGEBIETE (Int.Cl.5)**

C08F

Der vorliegende Recherchenbericht wurde für alle Patentansprüche erstellt

| Recherchenort | Abschlußdatum der Recherche | Prüfer |
|---|---|---|
| DEN HAAG | 8. September 1994 | Kaumann, E |